# FASCICULE DE BREVET EUROPEEN

(11) **EP 1 112 896 B1**
(45) Date de publication et mention de la délivrance du brevet: **07.09.2005**
(21) Numéro de dépôt: 00403549.9
(22) Date de dépôt: 15.12.2000
(51) Int. Cl.: B60R 16/02

(54) **Système de génération de puissance pour un réseau bitension**
Leistungerzeugungsystem für ein Doppelspannungsnetz
Power generation system for a dual-voltage

(30) Priorité: 30.12.1999 FR 9916750
(43) Date de publication de la demande: 04.07.2001
(73) Titulaire: Renault s.a.s., 92100 Boulogne Billancourt (FR)
(72) Inventeur: Dupuy, Philippe, 78112 Fourqueux (FR); Richer, Didier, 78100 Saint Germaine en Laye (FR)
(74) Mandataire: Davies, Owen Robert Treharne

(56) Documents cités:
- DE-A- 4 226 311
- US-A- 4 239 978

## Description

L'invention concerne un système de génération de puissance pour un réseau électrique bitension embarqué sur véhicule automobile, destiné à répondre à la demande croissante de puissance électrique dans les véhicules futurs, qui vont présenter de nouvelles fonctions électriques tendant à améliorer la sécurité, comme le confort des passagers. Simultanément, l'invention doit tenir compte des objectifs de consommation de carburant de plus en plus réduite, visant également à diminuer les émissions de polluants.

En effet, sur de nombreux projets de véhicules, les bilans électriques font apparaître une demande croissante de puissance électrique, liée à l'apparition de ces nouvelles fonctions électriques qui sont par exemple le chauffage et la climatisation, les soupapes pilotées électromagnétiquement, la direction assistée électrique, le freinage électrique ... . Or, au-delà de 3 kiloWatts de production électrique, l'architecture globale du système de production de puissance doit être profondément modifiée, en particulier l'alternateur qui est entraîné par l'arbre tournant du moteur thermique pour fournir la tension de sortie utile. Les alternateurs classiques de type synchrone triphasé, dans leur configuration actuelle, c'est-à-dire avec un rotor à griffes bobiné, un refroidissement à air et un redressement à diodes pour une tension de sortie de 14 Volts, ne fonctionneront pas de façon optimale.

Pour augmenter la puissance, différentes solutions ont été envisagées, comme le remplacement des griffes du rotor par des pôles saillants, l'ajout d'aimants au rotor ou le double bobinage au stator, l'amincissement des tôles, le refroidissement à eau, qui permettent d'augmenter sa puissance générée, sa densité et plus globalement ses performances.

Pour augmenter le rendement de production et tirer le meilleur parti des alternateurs, une solution consiste à remplacer les diodes du circuit de redressement par des transistors pour constituer un onduleur.

Une autre solution actuellement envisagée par les constructeurs automobiles consiste à augmenter la tension de sortie, en particulier à tripler la tension actuelle du réseau de 14 Volts pour atteindre 42 Volts. Cette solution est avantageuse car elle permet l'utilisation de certains consommateurs qui ne fonctionnent qu'avec 42 Volts, l'amélioration du réseau de distribution tant en ce qui concerne le relayage, le fusiblage, la connectique que la section des câbles électriques qui est alors réduite, et la production d'énergie supplémentaire.

Cependant, l'augmentation de la tension de sortie de l'alternateur doit rester compatible avec le standard actuel de tension du réseau de bord, soit 14 Volts, car il n'est pas envisageable de le remplacer brutalement et complètement par un réseau à 42 Volts, pour des raisons industrielles, techniques et économiques. Il faut donc envisager une phase de cohabitation des deux sous-réseaux d'alimentation électrique à 14 et 42 Volts au sein d'un même véhicule, même s'il faut prévoir l'évolution prochaine de certains circuits consommateurs du sous-réseau 14 Volts vers le sous-réseau 42 Volts.

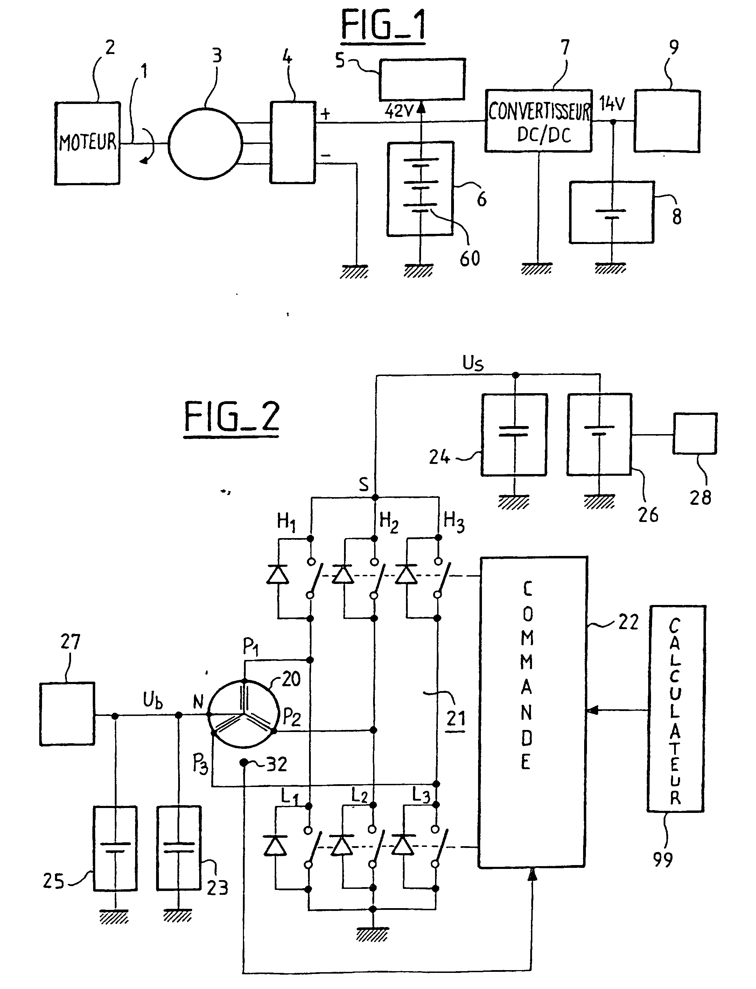

Cette phase de cohabitation des deux sous-réseaux de tensions différentes suppose une configuration électrique particulière du système de production d'énergie, dont un exemple est représenté sur le schéma fonctionnel de la figure 1. Il comporte, entraînée par l'arbre du moteur thermique 2 du véhicule, en direct ou via un réducteur, une machine électrique 3, de type alternateur ou alterno-démarreur, associée à un circuit de redressement 4 réalisé à partir d'un ou plusieurs ponts de diodes selon le nombre de bobinage du stator. Dans le cas d'un alterno-démarreur, le redressement s'effectue à l'aide de transistors constituant un onduleur. La machine ainsi redressée est reliée d'une part à des éléments 5 consommateurs en 42 Volts et d'autre part à une batterie 6, pouvant être constituée de plusieurs éléments de stockage 60, de tension comprise entre 30 et 48 Volts. Un convertisseur statique 7 doit abaisser la tension de 42 Volts à une tension nominale de 14 Volts, pour assurer le transfert d'énergie vers le deuxième réseau, qui comporte une batterie 8 de 12 Volts et alimente les éléments consommateurs 9 fonctionnant à cette tension.

Cette architecture présente de nombreux inconvénients, dont la présence de ce convertisseur électronique, coûteux, encombrant - environ 1,5 litre de volume selon sa puisance -, générant des pertes thermiques difficiles à évacuer.

De plus, la structure série entre l'alternateur et le réseau à 14 Volts aboutit à un rendement global limité par les rendements successifs des étages de conversion. On peut ajouter un coût global très supérieur à celui d'une architecture classique par alternateur sur réseau unique, à cause de l'ajout d'un convertisseur abaisseur de tension.

Le document DE-4226311 décrit un système de génération de puissance pour un réseau électrique bitension. Les deux réseaux sont reliés au point neutre et le valeur de tension du sous réseau est toujours de valeur moitié de l'autre.

L'invention vise à pallier ces inconvénients en proposant un système de production d'énergie pour réseau bitension sans convertisseur DC/DC de tension, pouvant fonctionner en alternateur ou en alterno-démarreur et autorisant le transfert de l'énergie d'un des deux sous-réseaux vers l'autre, notamment du 42 Volts vers le 14 Volts, mais également de façon totalement réversible.

Pour cela, l'objet de l'invention est un système de génération de puissance pour un réseau électrique bitension, comprenant une machine électrique de type alternateur triphasé dont les phases statoriques sont redressées pour générer la puissance souhaitée sur le sous-réseau fonctionnant à une première valeur de tension (Uₛ), le stator de l'alternateur triphasé (20) étant bobiné en étoile de façon à présenter un point neutre (N) auquel est relié le second sous-réseau fonctionnant à une deuxième valeur de tension (U_{b}) inférieure à la première, caractérisé en ce que qu'il comporte des moyens électroniques de commande (22) et de régulation des tensions (Uₛ et U_{b}) des deux sous-réseaux, les valeurs de régulation des deux sous-réseau étant indépendant et permettant le transfert de l'énergie depuis un des deux sous-réseaux vers l'autre de façon à rendre le système complètement réversible.

Selon une autre caractéristique du système de génération de puissance selon l'invention, les moyens de redressement des phases statoriques de l'alternateur triphasé sont constitués par un onduleur triphasé comprenant six interrupteurs H₁ à H₃ et L₁ à L₃, de type transistors, montés en série et dans le même sens, par groupe de deux entre la masse et la tension Uₛ la plus élevée pour chacune des trois phases du stator, chacun des six transistors étant piloté par le circuit électronique de commande, qui est destiné à asservir la valeur moyenne de la tension des trois phases à une tension de consigne permettant d'obtenir la tension U_{b} en entrée du second sous-réseau à plus basse tension. Selon une autre caractéristique, le système comporte de plus deux moyens de filtrage respectivement disposés au point neutre N en entrée du sous-réseau à plus basse tension U_{b} et en sortie de l'onduleur en entrée du sous-réseau à plus haute tension Uₛ.

Selon une autre caractéristique, le moyens de redressement des phases statoriques de l'alternateur triphasé sont constitués par un pont de redressement passif comprenant six diodes d₁ à d₆, montées par groupe de deux, en série et dans le même sens, entre la masse et la tension Uₛ la plus élevée pour chacune des trois phases du stator et en ce que les moyens électroniques de régulation de la tension U_{b} du second sous-réseau sont constitués d'un interrupteur I₀ dont la fermeture est pilotée par un circuit de commande.

Selon une autre caractéristique, les moyens de redressement des phases statoriques de l'alternateur triphasé sont constitués par un pont de redressement passif comprenant six diodes d₁ à d₆, montées par groupe de deux, en série et dans le même sens, entre la masse et la tension Uₛ la plus élevée pour chacune des trois phases du stator et en ce que les moyens électroniques de régulation de la tension U_{b} du second sous-réseau sont constitués par un régulateur linéaire ou à découpage.

D'autres caractéristiques et avantages de l'invention apparaîtront à la lecture de la description d'un exemple de réalisation d'un système de production de puissance pour réseau bitension, illustrée par les figures suivantes qui sont, outre la figure 1, déjà décrite à propos de l'art antérieur :
- la figure 2 : un schéma fonctionnel d'un système de production de puissance selon l'invention ;
- les figures 3 et 5 : deux schémas fonctionnels de deux variantes d'un premier mode de réalisation des moyens électroniques de régulation du réseau bitension selon l'invention ;
- les figures 4ₐ à 4_{g} : les chronogrammes des signaux délivrés par les, différents éléments du régulateur selon la première variante du premier mode de réalisation de l'invention ;
- la figure 6ₐ à 6_{c} : les chronogrammes des signaux délivrés par les différents éléments du régulateur selon la deuxième variante du premier mode de réalisation de l'invention ;
- la figure 7 : un schéma fonctionnel d'un circuit abaisseur de tension ;
- la figure 8 : un schéma fonctionnel d'un circuit élévateur de tension ;
- les figures 9 et 10 : les schémas fonctionnels de deux variantes du deuxième mode de réalisation du régulateur du réseau bitension selon l'invention.

Selon un premier mode de réalisation représenté schématiquement sur la figure 2, le système de production de puissance pour un réseau électrique bitension comprend une machine électrique triphasée 20 de type alternateur, qui peut être synchrone à rotor bobiné ou à aimants ou bien encore mixte bobinée et à aimants. Les phases statoriques sont redressées pour générer la puissance souhaitée sur le premier sous-réseau fonctionnant à une première valeur de tension Uₛ. Ce peut être aussi un alternateur asynchrone. Il est bobiné en étoile au stator de façon à présenter un point neutre N auquel est relié le second sous-réseau fonctionnant à une deuxième valeur de tension U_{b} inférieure à la première valeur de tension Uₛ.

Pour redresser le courant des phases statoriques de l'alternateur, ces trois phases sont reliées à un onduleur triphasé 21, qui délivre une tension Uₛ, égale à 42 Volts dans le cas particulier d'un véhicule automobile actuel, et qui est constitué de six interrupteurs H₁ à H₃ et L₁ à L₃. Ils sont disposés selon trois bras de deux interrupteurs chacun, montés en série et dans le même sens, l'un Lᵢ "low-side" entre la masse et une des phases et l'autre Hᵢ "high-side" entre la phase et la tension supérieure Uₛ. Ces interrupteurs sont des transistors de type MOSFET ou IGBT ou bipolaire ou autre, associés ou non à une diode inverse. Ils sont pilotés par des moyens électroniques de commande et de régulation 22 qui reçoivent des consignes de régulation des tensions Uₛ et U_{b} des deux sous-réseaux, provenant d'un calculateur 99 établissant des stratégies électroniques de gestion de l'énergie électrique du réseau. Ces moyens de commande 22 peuvent également recevoir une information sur la position du rotor par rapport au stator de la part d'un capteur de position 32.

Deux moyens de filtrage 23 et 24 peuvent être respectivement disposés à l'entrée de chacun des deux sous-réseaux, soit au niveau du point neutre N, vers le sous-réseau à 14 Volts et au niveau de la sortie S du circuit de régulation, vers le sous-réseau à 42 Volts. Ces moyens sont par exemple constitués de capacités associées à des inductances dimensionnées pour délivrer des tensions continues filtrées restant dans les tolérances admises pour l'application, en matière d'émission et de susceptibilité électromagnétique. Ces deux sous-réseaux peuvent comporter chacun une batterie, référencée respectivement 25 et 26, et alimenter des consommateurs 27 et 28 fonctionnant respectivement à 14 Volts et à 42 Volts.

Lorsque la machine électrique 20 est en mouvement, en mode alternateur entraîné par le moteur du véhicule ou en mode démarreur pour au contraire entraîner le moteur, la liaison de son point neutre N au sous-réseau à 14 Volts impose la polarisation moyenne des trois phases du stator au même potentiel U_{b} de 14 Volts, dont les impédances en mode continu sont équivalentes aux résistances des enroulements.

La régulation de tension, sur le sous-réseau de 14 Volts, est obtenue par l'ajustement de la valeur moyenne des trois tensions de phase, c'est-à-dire par l'ajustement des trois signaux de pilotage de la machine triphasée délivrés par le circuit électronique de commande et de régulation des tensions Uₛ et U_{b} du réseau bitension. Il existe deux procédés classiques de pilotage de cet alternateur, ou alterno-démarreur.

Selon une première variante de réalisation, la régulation de ces deux tensions se fait selon un procédé de modulation de largeur d'impulsion des signaux de commande des transistors constituant les bras de l'onduleur, pour générer sur les trois phases, trois ondes périodiques, de forme sinusoïdale, trapézoïdale, triangulaire par exemple, déphasées de 120° les unes des autres. Ce procédé est applicable aux trois types de machine : synchrone à rotor bobiné (SYRB), synchrone à aimant permanent (SYAP) et asynchrone (ASY).

Selon une deuxième variante de réalisation, la régulation se fait selon un procédé de commandes "pleine onde" du type redressement synchrone, applicable seulement aux machines synchrones à rotor bobiné.

Dans le cas des deux procédés, il faut asservir la tension moyenne U_{moy} des trois tensions statoriques, sur les trois points de sortie des phases P₁, P₂ et P₃, à une tension de consigne nécessaire pour la régulation du réseau à 14 Volts.

Dans le cas de la première variante de réalisation utilisant un procédé de modulation de largeur d'impulsions, la régulation de la tension supérieure Uₛ, égale notamment à 42 Volts, est réalisée par deux paramètres : le réglage de l'amplitude des consignes de phase et le réglage soit de l'excitation du rotor dans le cas d'un alternateur synchrone à rotor bobiné, soit du glissement de vitesse existant entre la vitesse du champ tournant statorique et la vitesse de rotation mécanique du rotor dans le cas d'un alternateur asynchrone, soit du déphasage entre le champ magnétique statorique et le flux rotorique dans le cas d'un alternateur synchrone à aimant permanent.

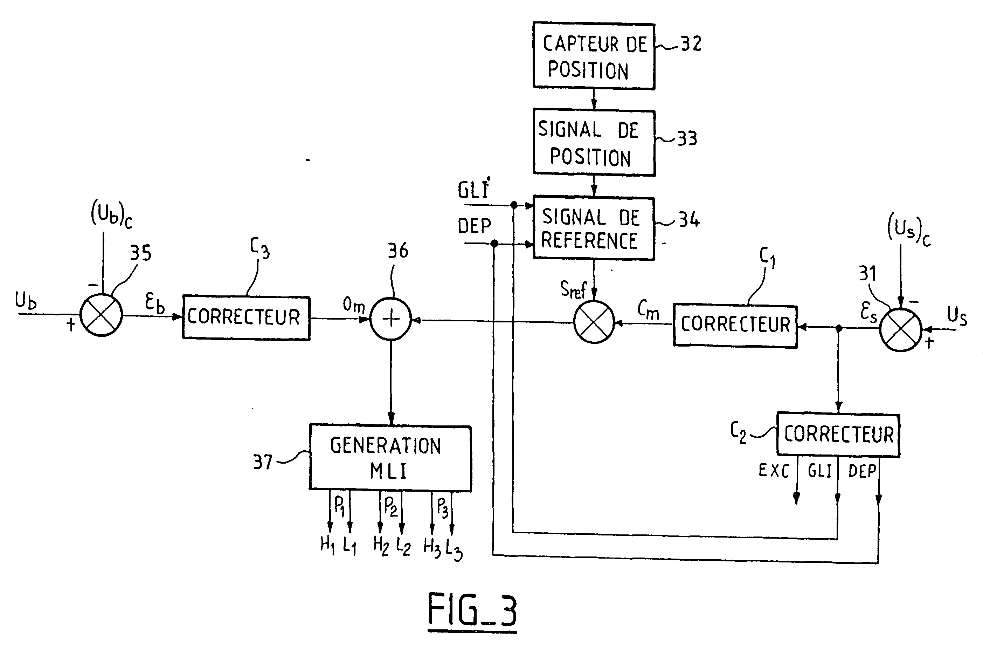

La figure 3 est un schéma fonctionnel des moyens électroniques de commande 22 de l'onduleur, assurant la régulation des deux tensions Uₛ et U_{b} du réseau bitension selon l'invention.

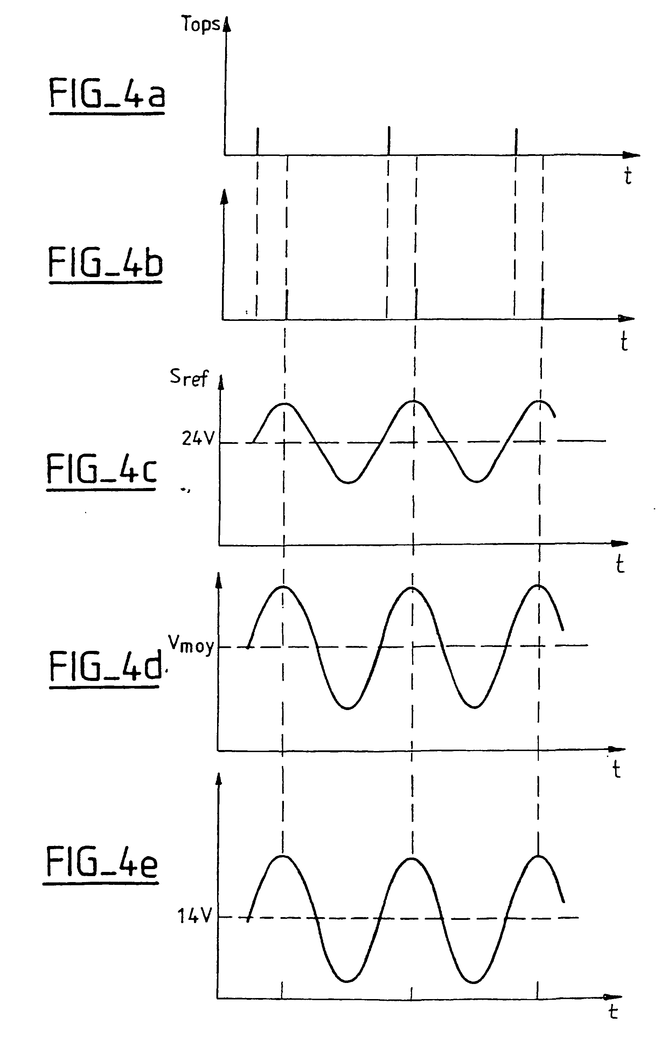

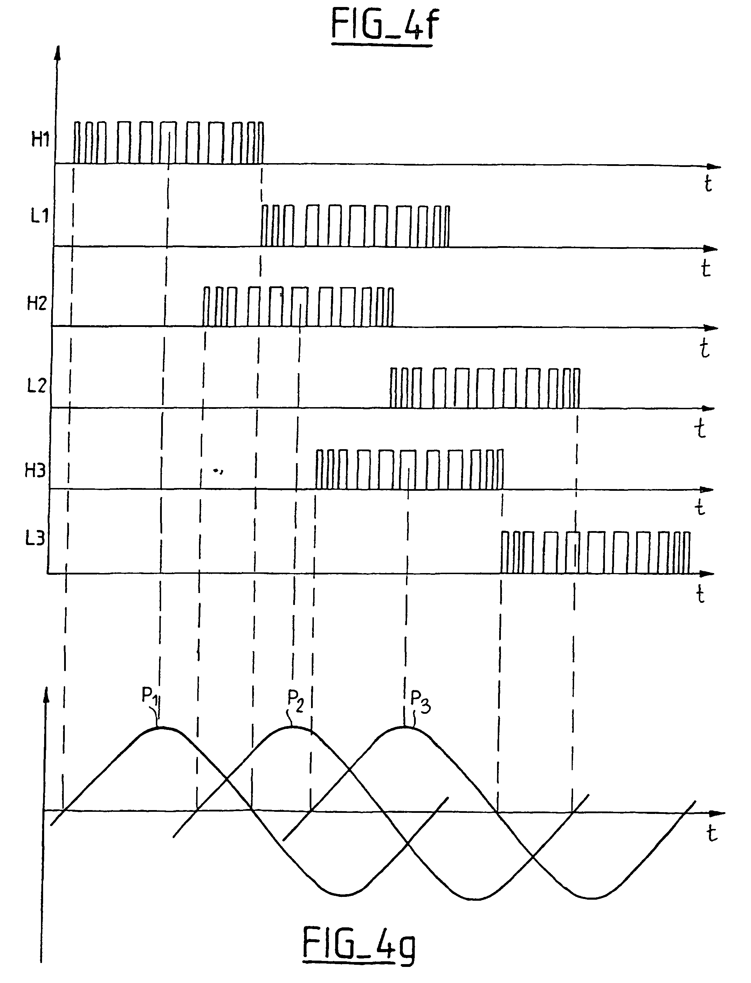

La régulation de la tension Uₛ la plus haute, soit 42 Volts, est réalisée par des moyens différenciateurs 31, qui reçoivent en entrée la tension mesurée à l'entrée du sous-réseau à Uₛ = 42 Volts et la comparent à une valeur de consigne (Uₛ)_{c} délivrée par un calculateur électronique extérieur au système. Il en déduit une erreur ε_{S} envoyée à des premiers moyens correcteurs C₁, ainsi qu'à des deuxièmes circuits correcteurs C₂ qui calculent des consignes de déphasage DEP ou de glissement GLI et d'excitation EXC du rotor. Simultanément, grâce à un capteur 32 de position du rotor par rapport au stator ou à un procédé d'autodétection selon le type de machine, des moyens 33 élaborent le signal de position, par exemple sous la forme de tops de synchronisation (figure 4ₐ) qui sont envoyés dans des moyens 34 d'élaboration d'un signal de référence S_{réf}, une sinusoïde par exemple.

Ces moyens 34 prennent en compte les consignes de déphasage DEP ou de glissement GLI, issues du deuxième correcteur C₂, pour décaler les tops de synchronisation du signal de position (figure 4b) à partir desquels est élaborée la sinusoïde de référence S_{ref} (figure 4_{c}). A celle-ci est ensuite appliqué un coefficient multiplicatif Cₘ, calculé par le circuit correcteur C₁, pour régler l'amplitude A de cette sinusoïde (figure 4_{d}). Cette amplitude est impérativement inférieure à Uₛ, soit 42 Volts, pour des raisons de sécurité des passagers du véhicule, de sorte que sa moyenne avoisine 24 Volts.

Selon l'invention, la régulation de la tension U_{b} la plus basse, soit 14 Volts, est réalisée par l'ajustement de la valeur moyenne des consignes des trois phases. Pour cela, des moyens différenciateurs 35, recevant d'une part la tension U_{b} mesurée aux bornes du deuxième sous-réseau et d'autre part la valeur de consigne (U_{b})_{c} délivrée par le calculateur extérieur, calculent un signal d'erreur ε_{b} qui traverse des troisièmes moyens correcteurs C₃, destinés à calculer un offset Oₘ à ajouter dans des moyens additionneurs 36, aux consignes de phase pour le réglage de la valeur moyenne de la sinusoïde de référence (figure 4ₑ), de façon à obtenir réellement U_{b} = 14 Volts à l'entrée du sous-réseau après la cellule de filtrage 23.

Ce signal de consigne de phase ainsi obtenu est alors transformé par un procédé de modulation de largeur d'impulsion dans des moyens 37 de génération d'impulsions de commande des six transistors de l'onduleur 21, Hᵢ et Lᵢ, i variant de 1 à 3 (figure 4_{f}). Cette commande des transistors de l'onduleur permet ainsi, de générer trois ondes périodiques de tension, décalées de 120° les unes des autres, sous forme de sinusoïdes sur la figure 4_{g}, au niveau des trois phases P₁ à P₃, autorisant une rotation continue du champ statorique de l'alternateur.

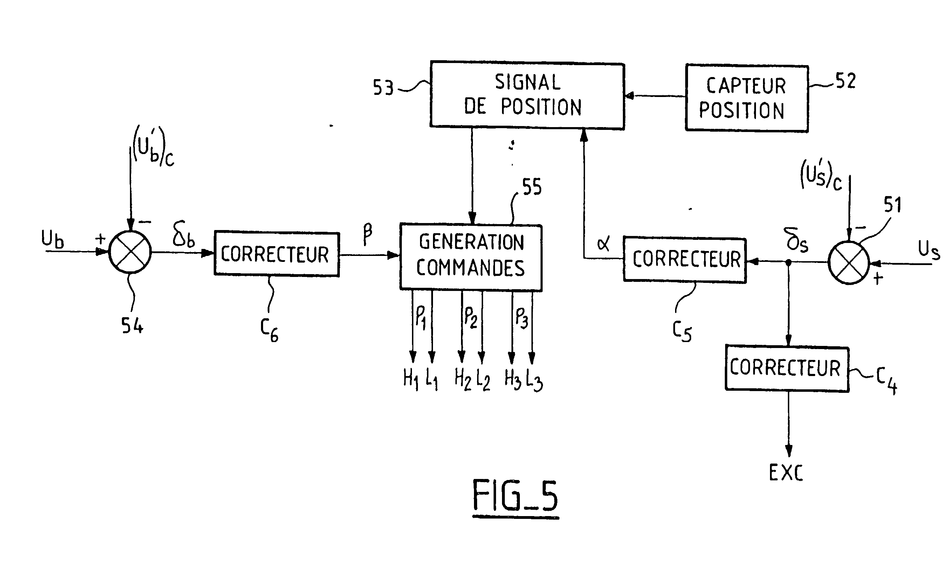

Selon une seconde variante de réalisation du système, dont un schéma fonctionnel des moyens électroniques de commande de l'onduleur est représenté sur la figure 5, dans le cas d'une machine synchrone à rotor bobiné, la régulation des deux tensions du réseau bitension se fait par un procédé de commande "pleine onde" de type redressement synchrone.

La régulation de la tension supérieure Uₛ en sortie de l'onduleur est réalisée par deux paramètres : le réglage de l'excitation du rotor d'une part et le réglage combiné de l'angle de déphasage α et de l'angle d'ouverture β des impulsions du signal de commande de l'onduleur.

Pour réaliser le réglage de l'excitation EXC du rotor de l'alternateur, des moyens différenciateurs 51 calculent une erreur δₛ existant entre la tension Uₛ mesurée à l'entrée du sous-réseau à 42 Volts et une valeur de consigne (U'ₛ)_{c} délivrée par un calculateur électronique extérieur, puis l'envoient sur des premiers moyens correcteurs C₄ qui vont calculer l'excitation EXC du rotor.

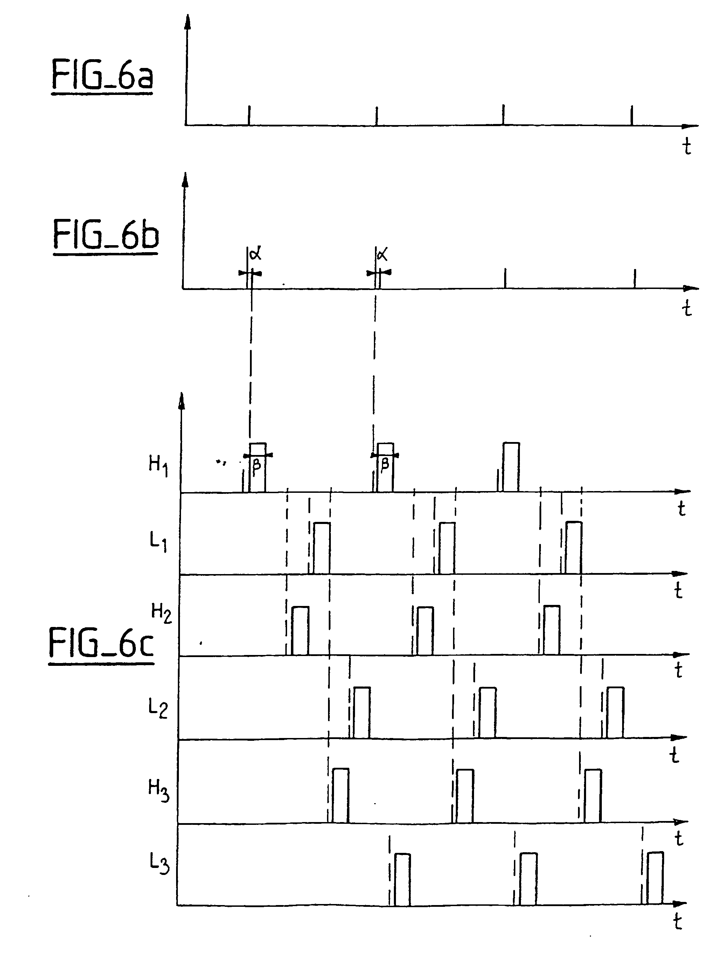

Parallèlement, un capteur 52 de position du rotor par rapport au stator ou un procédé d'auto-détection selon le type de machine synchrone, permettent d'élaborer un signal de position, par exemple sous forme de tops de synchronisation (figure 6ₐ), dans des moyens 53, qui vont être décalés d'un angle de déphasage α (figure 6_{b}), calculé dans des deuxièmes moyens correcteurs C₅ à partir de l'erreur δₛ précédemment trouvée.

Etant donnée la nécessité de réguler la tension U_{b} du second sous-réseau par ajustement de l'angle d'ouverture β des impulsions du signal de commande des transistors, le réglage de l'angle de déphasage α et de l'angle ouverture β doivent être combinés car ils ne sont pas indépendants l'un de l'autre.

Des seconds moyens différenciateurs 54 calculent l'erreur δ_{b} entre la tension U_{b} mesurée aux bornes du deuxième sous-réseau et une valeur de consigne (U'_{b})_{c} délivrée par le calculateur extérieur. Cette erreur δ_{b} traverse des moyens correcteurs C₆ qui calculent l'angle d'ouverture β, envoyé dans des moyens 55 de génération d'impulsions de commande de l'onduleur, qui reçoivent par ailleurs les tops de synchronisation décalés de l'angle α.

La figure 6_{c} représente les signaux de commande dans chacun des six transistors de l'onduleur, chaque couple de transistors haut Hᵢ et bas Lᵢ étant affecté à une des trois phases Pᵢ, i variant de 1 à 3, en sortie desquelles sont générées trois ondes périodiques de tension, décalées de 120°.

Lorsque la machine électrique est à l'arrêt, en mode convertisseur de tension, un pilotage adapté des trois bras de l'onduleur, par le circuit de commande 22, permet d'effectuer un transfert d'énergie d'un des deux réseaux, 14 ou 42 Volts, vers l'autre. La structure du convertisseur statique ainsi obtenu est de type abaisseur de tension ou élévateur de tension.

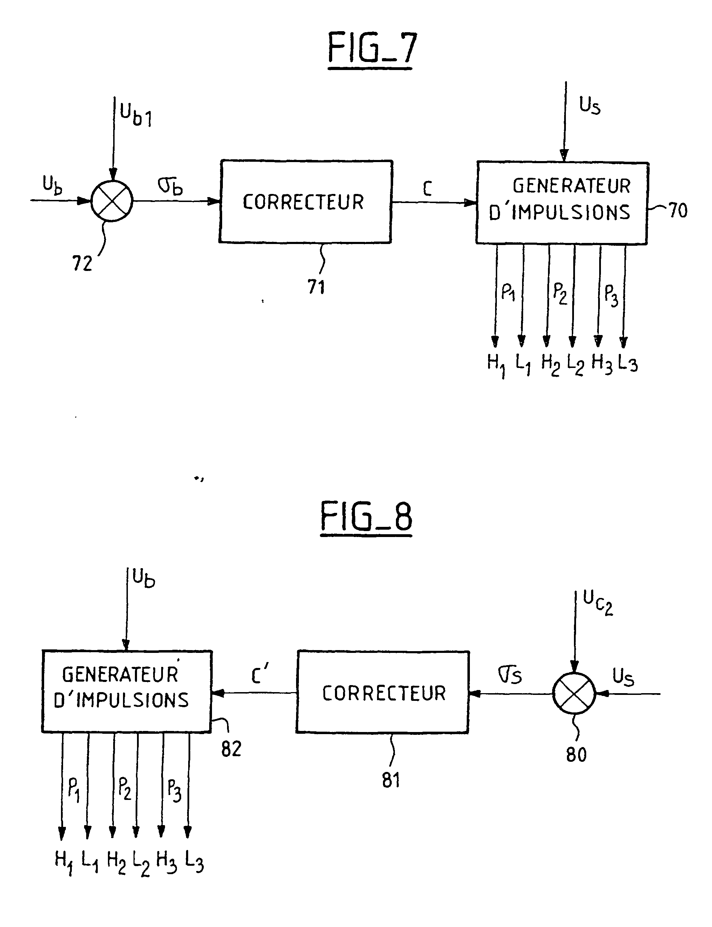

La figure 7 est un schéma fonctionnel d'une structure d'abaisseur de la tension 42 Volts vers la tension 14 Volts. Les trois bras de l'onduleur 21 sont pilotés à la même fréquence de découpage et peuvent être déphasés afin de diminuer la tension résiduelle de rejection sur les deux réseaux de tension.

Selon le mode de régulation par modulation de largeur d'impulsion, les moyens de commande 22 de l'onduleur 21 comprennent des moyens 70 de génération d'impulsions de commande des transistors qui reçoivent, comme informations d'entrée, d'une part la tension mesurée Uₛ aux bornes de la batterie 26 du premier sous-réseau à 42 Volts et d'autre part la consigne C calculée par des moyens correcteurs 71 à partir de l'erreur σ_{b} issue de la comparaison entre la tension mesurée U_{b} aux bornes du deuxième sous-réseau et une valeur de consigne U_{b1}, effectuée dans des moyens de comparaison 72.

La figure 8 est un schéma fonctionnel d'un convertisseur statique de type élévateur de tension. Dans ce cas, c'est la tension U_{b} délivrée par la batterie 25 qui est la donnée d'entrée à partir de laquelle va être régulée la tension Uₛ d'entrée du réseau 42 Volts. Cette tension Uₛ est mesurée et comparée dans des moyens de comparaison 80, pour être asservie à une consigne U_{C2} par détermination d'une consigne C' dans des moyens correcteurs 81 à partir de l'erreur σₛ issue de la comparaison, en cas de modulation de largeur d'impulsions. Puis des moyens générateurs 82 d'impulsions de commande envoie des signaux aux six transistors de l'onduleur 21.

Selon un autre mode de réalisation du système de génération de puissance selon l'invention, les moyens de redressement des phases statoriques de l'alternateur triphasé 90 sont de type passif, constitués d'un pont 91 de six diodes d₁ à d₆, soit trois groupes de deux diodes montées en série et dans le même sens, pour chacune des trois phases de l'alternateur, entre la masse et la tension Uₛ la plus élevée du réseau bitension, soit 42 Volts dans l'exemple choisi. La tension Uₛ du sous-réseau branché en sortie de ce pont de redressement passif n'est régulée que par la commande de l'excitation du rotor R de l'alternateur.

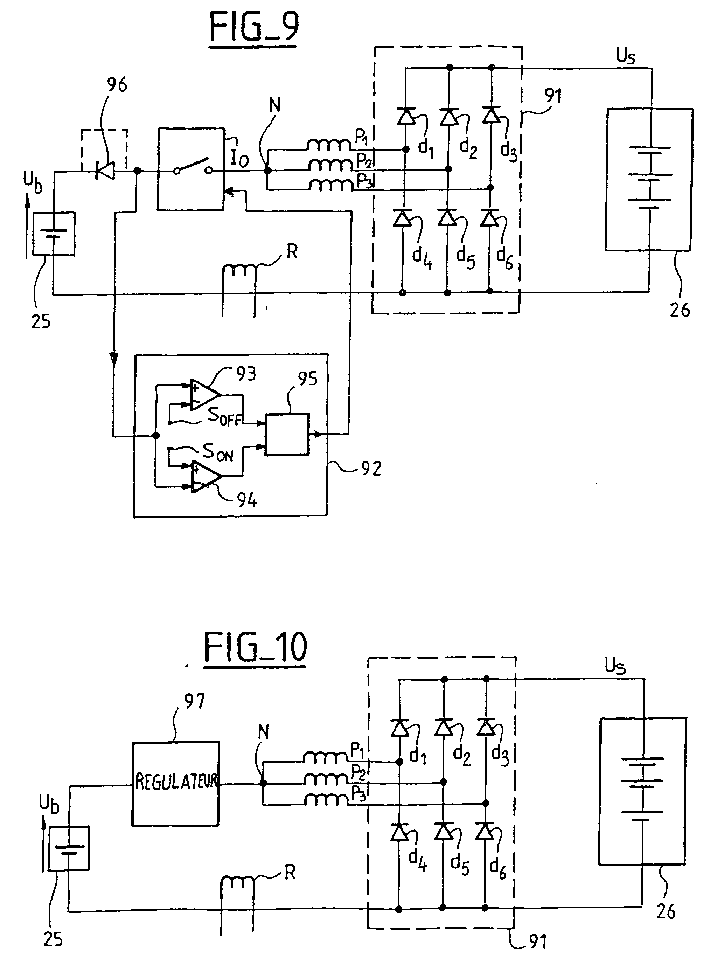

D'après une première variante, représentée sur la figure 9, les moyens électroniques de régulation de la tension U_{b} du second sous-réseau sont constitués par un interrupteur I₀, dont la fermeture est pilotée par un circuit de commande 92. Ce circuit 92 compare la tension mesurée U_{b} d'une part à un premier seuil S_{OFF}, dans un comparateur 93, pour délivrer un signal de commande de l'ouverture de l'interrupteur Iₒ, et d'autre part, à un deuxième seuil S_{ON}, dans un autre comparateur 94, pour délivrer un signal de commande de sa fermeture. Ces deux signaux de commande vont piloter alternativement l'interrupteur Iₒ, après passage dans une bascule logique 95.

Une diode 96 peut être placée en série avec l'interrupteur Iₒ pour améliorer son fonctionnement et éviter le passage d'un courant du sous-réseau à 14 Volts vers le sous-réseau à 42 Volts.

D'après une deuxième variante, représentée sur la figure 10, la régulation de la tension U_{b} du second sous-réseau est assurée par un régulateur 97, soit de type linéaire si la tension au point neutre N est proche de la tension U_{b} à l'entrée du sous-réseau, soit de type à découpage si la tension au point neutre N est voisine de la moitié de la tension Uₛ aux bornes du premier sous-réseau.

Grâce à l'invention, la présence d'un convertisseur électronique DC/DC, coûteux et volumineux, est supprimée entre les deux sous-réseaux. Le fait que l'alternateur produise directement de l'énergie au sous-réseau à 14 Volts sans intermédiaire permet l'obtention d'un très bon rendement. De plus, le système est complètement réversible, permettant le transfert de l'énergie depuis un des deux sous-réseaux vers l'autre. Grâce à l'indépendance des valeurs de régulation des deux sous-réseaux, il est possible d'appliquer l'invention à d'autres valeurs de tension, différentes de 14 et 42 Volts.

Le système selon l'invention rend compatible la production d'énergie électrique avec l'utilisation de tous types d'éléments de stockage, comme une batterie au plomb, au lithium, au nickel-cadmium ou un condensateur de grande valeur par exemple.

Enfin, le système est fiable et présente une durée de vie accrue grâce à la minimisation des composants électroniques mis en oeuvre pour produire l'énergie électrique au réseau bitension.

## Revendications

1. Système de génération de puissance pour un réseau électrique bitension, comprenant une machine électrique de type alternateur triphasé dont les phases statoriques sont redressées pour générer la puissance souhaitée sur le sous-réseau fonctionnant à une première valeur de tension (Uₛ), le stator de l'alternateur triphasé (20) étant bobiné en étoile de façon à présenter un point neutre (N) auquel est relié le second sous-réseau fonctionnant à une deuxième valeur de tension (U_{b}) inférieure à la première, **caractérisé en ce que** qu'il comporte des moyens électroniques de commande (22) et de régulation des tensions (Uₛ et U_{b})des deux sous-réseaux, les valeurs de régulation des deux sous-réseaux étant indépendantes et permettant le transfert de l'énergie depuis un des deux sous-réseaux vers l'autre de façon à rendre le système complètement réversible.

2. Système de génération de puissance selon la revendication 1, **caractérisé en ce que** les moyens de redressement des phases statoriques de l'alternateur triphasé sont constitués par un onduleur triphasé (21) comprenant six interrupteurs (H₁ à H₃) et (L₁ à L₃), de type transistors, montés en série et dans le même sens, par groupe de deux entre la masse et la tension (Uₛ) la plus élevée pour chacune des trois phases du stator, chacun des six transistors étant piloté par les moyens électroniques de commande (22), qui sont destinés à asservir la valeur moyenne de la tension des trois phases à une tension de consigne permettant d'obtenir la tension (U_{b}) en entrée du second sous-réseau à plus basse tension, et **en ce que** le système comporte de plus deux moyens de filtrage respectivement disposés au point neutre (N) en entrée du sous-réseau à plus basse tension (U_{b}) et en sortie de l'onduleur en entrée du sous-réseau à plus haute tension (Uₛ).

3. Système de génération de puissance selon la revendication 2 **caractérisé en ce que** les moyens électroniques (22) de commande réalise la régulation des deux tensions (Uₛ et U_{b}) du réseau bitension par modulation de la largeur des impulsions de commande des transistors constituant les trois bras de l'onduleur (21), la régulation de la tension supérieure (Uₛ) étant réalisée d'une part par le réglage de l'amplitude des consignes de phase et d'autre part par le réglage soit de l'excitation du rotor dans le cas d'un alternateur synchrone à rotor bobiné, soit du glissement de vitesse existant entre la vitesse du champ tournant statorique et la vitesse de rotation mécanique du rotor dans le cas d'un alternateur asynchrone, soit du déphasage entre le champ magnétique statorique et le flux rotorique dans le cas d'un alternateur synchrone à aimant permanent, et la régulation de la tension inférieure (U_{b}) étant réalisée par l'asservissement de la tension moyenne des trois phases de l'alternateur à une consigne destinée à obtenir la tension (U_{b}) en entrée du sous-réseau, après les moyens de filtrage (23).

4. Système de génération de puissance selon la revendication 2 **caractérisé en ce que**, dans le cas d'une machine électrique de type synchrone à rotor bobiné, les moyens électroniques (22) de commande réalisent la régulation des deux tensions (Uₛ et U_{b}) du réseau bitension par un procédé de commandes « pleine onde » de type redressement synchrone, la régulation de la tension inférieure (U_{b}) étant réalisée par le réglage de l'angle d'ouverture (β) des impulsions du signal de commande des transistors de l'onduleur (21) et la régulation de la tension supérieure (Uₛ) étant réalisée d'une part par le réglage de l'excitation du rotor de l'alternateur et d'autre part par le réglage combiné de l'angle de déphasage (α) et de l'angle d'ouverture (β) des impulsions de commande.

5. Système de génération de puissance selon la revendication 3, **caractérisé en ce que** les moyens électroniques (22) de commande et de régulation de l'onduleur (21) comprennent :
- des premiers moyens différenciateurs (31) recevant la tension (Uₛ) mesurée en entrée du premier sous-réseau et une valeur de consigne (Uₛ)_{c} délivrée par un calculateur extérieur, et délivrant une erreur (εₛ) ;
- des premiers moyens correcteurs (C₁) recevant ladite erreur (εₛ) issue des premiers moyens différenciateurs (31) et délivrant un coefficient multiplicatif (Cₘ) ;
- des seconds moyens correcteurs (C₂) recevant ladite erreur (εₛ) issue des premiers moyens différenciateurs (31) et calculant des consignes de déphasage (DEP) ou de glissement (GLI), et d'excitation (EXC) du rotor ;
- des moyens (34) d'élaboration d'une onde de référence (S_{réf}) à partir de tops de synchronisation décalés par les consignes de déphasage ou de glissement ;
- des seconds moyens différenciateurs (35) recevant la tension (U_{b}) mesurée en entrée du deuxième sous-réseau et une valeur de consigne (Uₛ)_{c} délivrée par un calculateur extérieur, et délivrant une erreur (ε_{b}) ;
- des troisièmes moyens correcteurs (C₃) recevant ladite erreur (ε_{b}) des deuxièmes moyens différenciateurs et calculant un offset (Oₘ) à ajouter aux consignes de phase pour le réglage de la valeur moyenne de l'onde de référence (S_{réf}) ;
- des moyens (37) de génération d'impulsions de commande des six transistors de l'onduleur (21).

6. Système de génération de puissance selon la revendication 4, **caractérisé en ce que** le circuit électronique (21) comprend :
- des premiers moyens différenciateurs (51) calculant une erreur (δₛ) existant entre la tension supérieure mesurée (Uₛ) à l'entrée du premier sous-réseau et une valeur de consigne (U'ₛ)_{c} délivrée par un calculateur extérieur ;
- des premiers moyens correcteurs (C₄) recevant ladite erreur (δₛ) issue des moyens différenciateurs (51) et calculant l'excitation (EXC) du rotor de l'alternateur ;
- des moyens (53) d'élaboration de tops de synchronisation décalés d'un angle de déphasage (α) calculé dans des seconds moyens correcteurs (C₅) à partir de l'erreur (δₛ) issue des moyens différenciateurs (51) ;
- des seconds moyens différenciateurs (54) calculant l'erreur (δ_{b}) existant entre la tension inférieure (U_{b}) mesurée à l'entrée du second sous-réseau et une valeur de consigne (U'_{b})_{c} délivrée par le calculateur extérieur ;
- des troisièmes moyens correcteurs (C₆) recevant ladite erreur (δ_{b}) issu des deuxièmes moyens différenciateurs (54) et calculant l'angle d'ouverture (β) des impulsions de commande des six transistors de l'onduleur (21), élaborées dans des moyens (55) de génération qui reçoivent également les tops de synchronisation décalés de l'angle de déphasage (α) issu des moyens (δ₃).

7. Système de génération de puissance selon la revendication 2 **caractérisée en ce que** l'alternateur (20) étant à l'arrêt, en mode convertisseur de tension, les moyens de commande (22) de l'onduleur (21) comprennent des moyens (70) de génération d'impulsions de commande des transistors qui reçoivent, comme informations d'entrée, d'une part la tension mesurée (Uₛ) aux bornes de la batterie (26)du premier sous-réseau à 42 Volts et d'autre part une consigne (C) calculée par des moyens correcteurs (71) à partir de l'erreur (σ_{b}) issue de la comparaison dans des moyens de comparaison (72), entre la tension mesurée (U_{b}) aux bornes du deuxième sous-réseau et une valeur de consigne (U_{b1}).

8. Système de génération de puissance selon la revendication 2 **caractérisé en ce que** l'alternateur (20) étant à l'arrêt, en mode convertisseur de tension, les moyens de commande (22) de l'onduleur (21) comprennent des moyens (82) générateurs d'impulsions de commande des transistors qui reçoivent d'une part la tension mesurée (U_{b}) aux bornes de la batterie (25) du deuxième sous-réseau à plus basse tension et d'autre part une consigne (C') calculée par des moyens correcteurs (81) à partir de l'erreur (σₛ) issue de la l'erreur (σₛ) issue de la comparaison entre la tension (Uₛ) mesurée aux bornes du premier sous-réseau et une valeur de consigne (U_{c2}).

9. Système de génération de puissance selon l'une des revendications 1 à 8, **caractérisé en ce que** les six interrupteurs (I₁ à I₆) commandables sont des transistors de type MOSFET ou IGBT ou bipolaire, associés ou pas à une diode externe.

10. Système de génération de puissance selon l'une des revendications 2 à 9, **caractérisé en ce que** les deux moyens de filtrage (23 et 24) sont constitués de capacités associées à des inductances dimensionnées de façon à délivrer des tensions continues filtrées restant dans les tolérances admises.

11. Système de génération de puissance selon la revendication 1, **caractérisé en ce que** les moyens de redressement des phases statoriques de l'alternateur triphasé sont constitués par un pont (91) de redressement passif comprenant six diodes (d₁ à d₆), montées par groupe de deux, en série et dans le même sens, entre la masse et la tension (Uₛ) la plus élevée pour chacune des trois phases du stator et **en ce que** les moyens électroniques de régulation de la tension (U_{b}) du second sous-réseau sont constitués d'un interrupteur (I₀) dont la fermeture est pilotée par un circuit de commande (92).

12. Système de génération de puissance selon la revendication 1, **caractérisé en ce que** les moyens de redressement des phases statoriques de l'alternateur triphasé sont constitués par un pont (91) de redressement passif comprenant six diodes (d₁ à d₆), montées par groupe de deux, en série et dans le même sens, entre la masse et la tension (Uₛ) la plus élevée pour chacune des trois phases du stator et **en ce que** les moyens électroniques de régulation de la tension (U_{b}) du second sous-réseau sont constitués par un régulateur (95) linéaire ou à découpage.

13. Système de génération de puissance selon l'une des revendications 1 à 12, **caractérisé en ce qu'**il comporte de plus deux batteries (25 et 26) placées en entrée respectivement des deux étages de tension (U₁ et U₂), après les cellules de filtrage (23 et 24).

## Patentansprüche

1. Leistungserzeugungssystem für ein elektrisches Doppelspannungsnetz mit einer elektrischen Maschine vom Drei-Phasen-Wechselstromgenerator-Typ, deren Statorphasen gleichgerichtet sind, um die erwünschte Leistung auf dem Unternetz zu erzeugen, das bei einem ersten Spannungswert (Uₛ) arbeitet, wobei der Stator des Drei-Phasen-Wechselstromgenerators (20) sternförmig gewickelt ist, um einen neutralen Punkt (N) zu bieten, mit welchem das zweite Untemetz verbunden ist, welches bei einem Spannungswert (U_{b}) arbeitet, der geringer als der erste ist, **dadurch gekennzeichnet, dass** es elektronische Mittel zur Steuerung (22) und zur Regelung der Spannungen (Uₛ und U_{b}) der zwei Unternetze umfasst, wobei die Regelungswerte der beiden Unternetze unabhängig sind und den Energietransfer von einem der Unternetze zum anderen ermöglichen, um so das System vollständig umkehrbar zu machen.

2. Leistungserzeugungssystem gemäß Anspruch 1, **dadurch gekennzeichnet, dass** die Mittel zur Gleichrichtung der Statorphasen des dreiphasigen Wechselstromgenerators aus einem dreiphasigen Wechselrichter (21) bestehen, mit sechs Schaltern (H₁ bis H₃) und (L₁ bis L₃), vom Transistortyp, die in Serie und in derselben Richtung montiert sind, in Zweiergruppen zwischen der Masse und der Höchstspannung (Uₛ) für jede der drei Phasen des Stators, wobei ein jeder der sechs Transistoren durch elektronische Steuermittel (22) gesteuert wird, die dazu bestimmt sind, den Durchschnittsspannungswert der drei Phasen auf eine Sollspannung zu regeln, was es ermöglicht, die Spannung (U_{b}) am Eingang des zweiten Unternetzes mit der geringsten Spannung zu erhalten, und **dadurch**, dass das System außerdem zwei Filtermittel aufweist, die jeweils am neutralen Punkt (N) am Eingang des Unternetzes mit der geringsten Spannung (U_{b}) und am Ausgang des Wechselrichters am Eingang des Unternetzes mit der höchsten Spannung (Uₛ) angeordnet sind.

3. Leistungserzeugungssystem gemäß Anspruch 2, **dadurch gekennzeichnet, dass** die elektronischen Steuermittel (22) die Regelung der zwei Spannungen (Uₛ und U_{b}) des Doppelspannungsnetzes durch Modulierung der Breite der Steuerungspulse der die drei Arme des Wechselrichters (21) bildenden Transistoren erreicht, wobei die Regelung der oberen Spannung (Uₛ) einerseits durch die Regelung der Amplitude der Phasensollwerte erreicht wird und andererseits durch die Regelung entweder der Erregung des Rotors im Falle eines synchronen Wechselstromgenerators mit gewickelter Spule, oder des zwischen der Geschwindigkeit des drehenden Statorfeldes und der mechanischen Drehgeschwindigkeit des Rotors bestehenden Schlupfes im Falle eines asynchronen Wechselstromgenerators, oder der Phasenabweichung zwischen dem magnetischen Statorfeld und dem Rotorfluss im Falle eines synchronen Wechselstromgenerators mit Permanentmagneten, und wobei die Regelung der unteren Spannung (U_{b}) durch die Regelung der Durchschnittsspannung der drei Phasen des Wechselstromgenerators auf einen Sollwert erreicht wird, der dazu bestimmt ist, die Spannung (U_{b}) am Eingang des Unternetzes zu erzielen, nach den Filtermitteln (23).

4. Leistungserzeugungssystem gemäß Anspruch 2, **dadurch gekennzeichnet, dass** im Falle einer elektrischen Maschine vom synchronen Typ mit gewickeltem Rotor die elektrischen Steuerungsmittel (22) die Regelung der zwei Spannungen (Uₛ und U_{b}) des Doppelspannungsnetzes durch ein "Vollwellen"-Störungsverfahren vom synchronen Gleichrichtungstyp erreichen, wobei die Regelung der unteren Spannung (U_{b}) durch die Regelung des Öffnungswinkels (β) der Pulse des Steuerungssignals der Transistoren des Wechselrichters (21) erreicht wird und die Regelung der oberen Spannung (Uₛ) einerseits durch die Regelung der Erregung des Rotors des Wechselstromgenerators und andererseits durch die kombinierte Regelung des Phasenverschiebungswinkels (α) und des Öffnungswinkels (β) der Steuerungspulse erreicht wird.

5. Leistungserzeugungssystem gemäß Anspruch 3, **dadurch gekennzeichnet, dass** die elektronischen Mittel (21) zur Steuerung und Regelung des Wechselrichters (21) folgendes umfassen:
- erste Differenzierungsmittel (31), die die am Eingang des ersten Unternetzes gemessene Spannung (Uₛ) und einen durch einen externen Rechner gelieferten Sollwert (Uₛ)_{c} erhalten und einen Fehler (εₛ) ausgeben;
- erste Korrekturmittel (C₁), die den von den ersten Differenzierungsmitteln (31) stammenden Fehler (εₛ) erhalten und einen Multiplikationskoeffizienten (Cₘ) ausgeben;
- zweite Korrekturmittel (C₂), die den von den ersten Differenzierungsmitteln (31) stammenden Fehler (εₛ) erhalten und Sollwerte zur Phasenverschiebung (DEP) oder zum Schlupf (GLI) und zur Erregung (EXC) des Rotors berechnen;
- Mittel (34) zur Ermittlung einer Referenzkurve (S_{ref}) anhand von Synchronisationspulsen, verschoben um die Werte der Phasenverschiebung oder des Schlupfes;
- zweite Differenzierungsmittel (35), welche die am Eingang des zweiten Unternetzes gemessene Spannung (U_{b}) und einen durch einen externen Rechner gelieferten Sollwert (Uₛ)_{c} empfangen und einen Fehler (ε_{b}) ausgeben;
- dritte Korrekturmittel (C₃), welche den Fehler (ε_{b}) von den zweiten Differenzierungsmitteln erhalten und einen Offset (Oₘ) berechnen, welcher den Phasensollwerten zur Regelung des Durchschnittswertes der Referenzkurve (S_{ref}) hinzugefügt wird;
- Mittel (37) zur Erzeugung von Steuerungspulsen der sechs Transistoren des Wechselrichters (21).

6. Leistungserzeugungssystem gemäß Anspruch 4, **dadurch gekennzeichnet, dass** die elektronische Schaltung (21) folgendes umfasst:
- erste Differenzierungsmittel (51), die einen zwischen der am Eingang des ersten Unternetzes gemessenen oberen Spannung (U'ₛ) und einem durch einen externen Rechner gelieferten Sollwert (U'ₛ)_{c} bestehenden Fehler (δₛ) berechnen;
- erste Korrekturmittel (C₄), welche den von den Differenzierungsmitteln (51) stammenden Fehler (δₛ) empfangen und die Erregung (EXC) des Rotors des Wechselstromgenerators berechnen;
- Mittel (53) zur Ermittlung von Synchronisationspulsen, die um einen Phasenverschiebungswinkel (α) verschoben sind, der in zweiten Korrekturmitteln (C₅) anhand des von den Differenzierungsmitteln (51) stammenden Fehlers (δₛ) berechnet wird;
- zweite Differenzierungsmittel (54), welche den zwischen der am Eingang des zweiten Unternetzes gemessenen unteren Spannung (U_{b}) und einem durch den externen Rechner gelieferten Sollwert (U'_{b})_{c} bestehenden Fehler (δ_{b}) berechnen;
- dritte Korrekturmittel (C₆), welche den von den zweiten Differenzierungsmitteln (54) stammenden Fehler (δ_{b}) empfangen und den Öffnungswinkel (β) der Steuerungspulse der sechs Transistoren des Wechselrichters (21) berechnen, welche in Erzeugungsmitteln (55) ermittelt werden, die ebenso die von den Mitteln (δ₃) stammenden, um den Phasenverschiebungswinkel (α) versetzten Synchronisationspulse erhalten.

7. Leistungserzeugungssystem gemäß Anspruch 2, **dadurch gekennzeichnet, dass** bei angehaltenem Wechselstromgenerator (20), im Spannungsumwandlungsmodus, die Steuerungsmittel (22) des Wechselrichters (21) Mittel (70) zur Erzeugung von Steuerungspulsen der Transistoren umfassen, welche als Eingangsinformationen einerseits die an den Enden der Batterie (26) des ersten Unternetzes mit 42 Volt gemessene Spannung (Uₛ) erhalten und andererseits einen Sollwert (C), der von Korrekturmitteln (71) anhand des Fehlers (σ_{b}) berechnet wird, der aus dem Vergleich in den Vergleichsmitteln (72) zwischen der an den Enden des zweiten Unternetzes gemessenen Spannung (U_{b}) und einem Sollwert (U_{b1}) stammt.

8. Leistungserzeugungssystem gemäß Anspruch 2, **dadurch gekennzeichnet, dass** bei angehaltenem Wechselstromgenerator (20) im Spannungsumwandlungsmodus die Steuerungsmittel (22) des Wechselrichters (21) Mittel (82) zur Erzeugung von Steuerungspulsen für die Transistoren umfassen, die einerseits die an den Enden der Batterie (25) des zweiten Unternetzes mit der geringsten Spannung gemessene Spannung (U_{b}) erhalten und andererseits einen Sollwert (C'), der durch Korrekturmittel (81) anhand des Fehlers (σₛ) berechnet wird, der aus dem Vergleich zwischen der an den Enden des ersten Unternetzes gemessenen Spannung (Uₛ) mit einem Sollwert (U_{c2}) stammt.

9. Leistungserzeugungssystem gemäß einem der Ansprüche 1 bis 8, **dadurch gekennzeichnet, dass** die sechs steuerbaren Schalter (I₁ bis I₆) Transistoren vom MOSFET- oder IGBT- oder bipolaren Typ sind, unter Zuordnung einer externen Diode oder nicht.

10. Leistungserzeugungssystem gemäß einem der Ansprüche 2 bis 9, **dadurch gekennzeichnet, dass** die zwei Filtermittel (23 und 24) aus Kondensatoren mit zugeordneten Spulen bestehen, die so dimensioniert sind, dass sie gefilterte Gleichspannungen liefern, die innerhalb zulässiger Toleranzen verbleiben.

11. Leistungserzeugungssystem gemäß Anspruch 1, **dadurch gekennzeichnet, dass** die Mittel zur Gleichrichtung der Statorphasen des dreiphasigen Wechselstromgenerators aus einer passiven Gleichrichtungsbrücke (91) bestehen, die sechs Dioden (d₁ bis d₆) aufweist, die in Zweiergruppen, in Serie und in der gleichen Richtung montiert sind, zwischen der Masse und der Höchstspannung (Uₛ) für jede der drei Phasen des Stators, und **dadurch**, dass die elektronischen Mittel zur Regelung der Spannung (U_{b}) des zweiten Unternetzes aus einem Schalter (I₀) bestehen, dessen Schließung durch eine Steuerungsschaltung (92) gesteuert wird.

12. Leistungserzeugungssystem gemäß Anspruch 1, **dadurch gekennzeichnet, dass** die Mittel zur Gleichrichtung der Statorphasen des dreiphasigen Wechselstromgenerators aus einer passiven Gleichrichtungsbrücke (91) bestehen, welche sechs Dioden (d₁ bis d₆) umfasst, die in Zweiergruppen, in Serie und in derselben Richtung montiert sind, zwischen der Masse und der Höchstspannung (Uₛ) für jede der drei Phasen des Stators, und **dadurch**, dass die elektronischen Mittel zur Regelung der Spannung (U_{b}) des zweiten Unternetzes aus einem linearen oder schaltenden Regler (95) bestehen.

13. Leistungserzeugungssystem gemäß einem der Ansprüche 1 bis 12, **dadurch gekennzeichnet, dass** es zusätzlich zwei Batterien (25 und 26) umfasst, die am Eingang jeweils der zwei Spannungsstufen (U₁ und U₂) angeordnet sind, nach den Filterzellen (23 und 24).

## Claims

1. A power generation system for a bi-voltage electrical network, comprising an electrical machine of the three-phase alternator type whose stator phases are rectified to generate the power required with respect to the sub-network operating at a first voltage value (Uₛ), the stator of the three-phase alternator (20) being star-wound in order to present a neutral point (N) to which the second sub-network, operating at a second voltage value (U_{b}) lower than the first, is connected, **characterised in that** it comprises electronic control and regulation means (22) of the voltages (Uₛ, U_{b}) of the two sub-networks, the regulation values of the two sub-networks being independent and enabling the transfer of energy from one of the two sub-networks to the other so as to make the system fully reversible.

2. A power generation system as claimed in claim 1, **characterised in that** the rectification means for the stator phases of the three-phase alternator are formed by a three-phase inverter (21) comprising six switches (H₁ to H₃) and (L₁ to L₃), of the transistor type, mounted in series and in the same direction, in groups of two between the earth and the highest voltage (Uₛ) for each of the three stator phases, each of the six transistors being driven by the electronic control means (22) which are adapted to subject the mean value of the voltage of the three phases to a reference voltage making it possible to obtain the voltage (U_{b}) at the input of the second sub-network of lower voltage, and **in that** the system further comprises two filter means disposed respectively at the neutral point (N) at the input to the sub-network of lower voltage (U_{b}) and at the output from the inverter to the input to the sub-network of higher voltage (Uₛ).

3. A power generation system as claimed in claim 2, **characterised in that** the electronic control means (22) carry out the regulation of the two voltages (Uₛ and U_{b}) of the bi-voltage network by modulation of the width of the control pulses of the transistors forming the three arms of the inverter (21), the regulation of the higher voltage (Uₛ) being carried out by adjusting the amplitude of the phase references and by adjusting either the excitation of the rotor in the case of a synchronous alternator with a wound rotor, or the speed slip existing between the speed of the rotary stator field and the mechanical speed of rotation of the rotor in the case of an asynchronous alternator, or the phase-shift between the magnetic stator field and the rotor flux in the case of a synchronous alternator with a permanent magnet, and the regulation of the lower voltage (U_{b}) being carried out by subjecting the mean voltage of the three phases of the alternator to a reference adapted to obtain the voltage (U_{b}) at the input to the sub-network, after the filter means (23).

4. A power generation system as claimed in claim 2, **characterised in that**, in the case of an electrical machine of synchronous type with a wound rotor, the electronic control means (22) carry out the regulation of the two voltages (Uₛ, U_{b}) of the bi-voltage network by a "full wave" control method of the synchronous rectification type, the regulation of the lower voltage (U_{b}) being carried out by adjusting the angle of opening (β) of the pulses of the control signal of the transistors of the inverter (21) and the regulation of the higher voltage (Uₛ) being carried out by adjusting the excitation of the rotor of the alternator and by combined adjustment of the phase-shift angle (α) and the angle of opening (β) of the control pulses.

5. A power generation system as claimed in claim 3, **characterised in that** the electronic control and regulation means (22) of the inverter (21) comprise:
- first differentiator means (31) receiving the voltage (Uₛ) measured at the input to the first sub-network and a reference value (Uₛ)_{c} supplied by an external computer, and supplying an error (εₛ);
- first corrector means (C₁) receiving this error (εₛ) from the first differentiator means (31) and a supplying a coefficient of multiplication (Cₘ);
- second corrector means (C₂) receiving this error (εₛ) from the first differentiator means (31) and calculating the phase shift (DEP), slip (GLI) or rotor excitation (EXC) references;
- means (34) for formulating a reference wave (s_{ref}) from synchronisation spikes offset by the phase shift or slip references;
- second differentiator means (35) receiving the voltage (U_{b}) measured at the input to the second sub-network and a reference value (Uₛ)_{c} supplied by an external computer, and supplying an error (ε_{b});
- third corrector means (C₃) receiving this error (ε_{b}) from the second differentiator means and calculating an offset (Oₘ) to be added to the phase references for the adjustment of the mean value of the reference wave (S_{ref});
- means (37) for generating control pulses of the six transistors of the inverter (21).

6. A power generation system as claimed in claim 4, **characterised in that** the electronic circuit (21) comprises:
- first differentiator means (51) calculating an error (δₛ) existing between the higher voltage (Uₛ) measured at the input of the first sub-network and a reference value (U'ₛ)_{c} supplied by an external computer;
- first corrector means (C₄) receiving this error (δₛ) from the differentiator means (51) and calculating the excitation (EXC) of the rotor of the alternator;
- means (53) for processing synchronisation spikes offset by a phase shift angle (α) calculated in second corrector means (C₅) from the error (δₛ) from the differentiator means (51);
- second differentiator means (54) calculating the error (δ_{b}) existing between the lower voltage (U_{b}) measured at the input of the second sub-network and a reference value (U'_{b})_{c} supplied by the external computer;
- third corrector means (C₆) receiving the error (δ_{b}) from the second differentiator means (54) and calculating the angle of opening (β) of the control pulses of the six transistors of the inverter (21), processed in generation means (55) which also receive the synchronisation spikes offset by the phase shift angle (α) from the means (δ₃).

7. A power generation system as claimed in claim 2, **characterised in that** when the alternator (20) is stopped, in voltage converter mode, the control means (22) of the inverter (21) comprise means (70) for generating control pulses of the transistors which receive, as input data, the voltage (Uₛ) measured at the terminals of the battery (26) of the first sub-network at 42 Volts and a reference (C) calculated by corrector means (71) from the error (σ_{b}) resulting from the comparison, in comparison means (72), between the voltage (U_{b}) measured at the terminals of the second sub-network and a reference value (U_{b1}).

8. A power generation system as claimed in claim 2, **characterised in that** when the alternator (20) is stopped, in voltage converter mode, the control means (22) of the inverter (21) comprise means (82) generating control pulses of the transistors which receive the voltage (U_{b}) measured at the terminals of the battery (25) of the second sub-network of lower voltage and a reference (C') calculated by corrector means (81) from the error (σₛ) resulting from the comparison between the voltage (Uₛ) measured at the terminals of the first sub-network and a reference value (U_{c2}).

9. A power generation system as claimed in one of claims 1 to 8, **characterised in that** the six controllable switches (I₁ to I₆) are transistors of the MOSFET or IGBT or bipolar type, whether associated or not with an external diode.

10. A power generation system as claimed in one of claims 2 to 9, **characterised in that** the two filter means (23, 24) are formed by capacitors associated with inductances dimensioned to supply filtered continuous voltages remaining within the admissible tolerances.

11. A power generation system as claimed in claim 1, **characterised in that** the rectification means for the stator phases of the three-phase alternator are formed by a passive rectification bridge (91) comprising six diodes (d₁ to d₆), mounted in groups of two, in series and in the same direction, between the earth and the highest voltage (Uₛ) for each of the three phases of the stator and **in that** the electronic regulation means of the voltage (U_{b}) of the second sub-network are formed by a switch (Iₒ) whose closure is driven by a control circuit (92).

12. A power generation system as claimed in claim 1, **characterised in that** the rectification means of the stator phases of the three-phase alternator are formed by a passive rectification bridge (91) comprising six diodes (d₁ to d₆), mounted in groups of two, in series and in the same direction, between the earth and the highest voltage (Uₛ) for each of the three phases of the stator and **in that** the electronic regulation means of the voltage (U_{b}) of the second sub-network are formed by a linear or cut-off regulator (95).

13. A power generation system as claimed in one of claims 1 to 12, **characterised in that** it further comprises two batteries (25, 26) disposed at the input, respectively, of the two voltage stages (U₁ and U₂), after the filter cells (23, 24).
